# EUROPEAN PATENT SPECIFICATION

(11) **EP 3 468 217 B1**
(45) Date of publication and mention of the grant of the patent: **13.12.2023**
(21) Application number: 17802714.0
(22) Date of filing: 19.05.2017
(51) Int. Cl.: H04Q 9/00, E02D 29/14, G08B 13/08, G08B 25/04, G08B 25/10, G08C 15/00, G08C 17/00, H04M 11/00

(54) **MANHOLE MONITORING SYSTEM AND METHOD**
SYSTEM UND VERFAHREN ZUR ÜBERWACHUNG EINES EINSTIEGSSCHACHTS
SYSTÈME ET PROCÉDÉ DE SURVEILLANCE DE TROU D'HOMME

(30) Priority: 23.05.2016 JP 2016102361
(43) Date of publication of application: 10.04.2019
(73) Proprietor: Hitachi Systems, Ltd., Tokyo 141-8672 (JP)
(72) Inventor: UEKAWA, Kyohei, Tokyo 141-8672 (JP); KAZI, Mutsumi, Tokyo 141-8672 (JP); OKUDA, Hiraku, Tokyo 141-8672 (JP)
(74) Representative: Hoffmann Eitle
(86) International application number: PCT/JP2017/018909
(87) International publication number: WO 2017/204122

(56) References cited:
- WO-A1-2007/100191
- WO-A1-2007/111412
- WO-A1-2016/024352
- JP-A- 2004 364 436
- JP-A- 2006 323 755
- JP-A- 2009 503 919
- KR-A- 20040 055 028
- US-A1- 2007 103 324
- US-A1- 2007 159 326
- US-A1- 2010 019 912

## Description

### [Technical Field]

The present invention relates to a manhole monitoring system configured to monitor an opening/closing state of a manhole lid of the manhole, and a method thereof.

### (Background Art]

An art related to the technical field is disclosed in Japanese Unexamined Patent Application Publication No. 2015-55915 (Patent Literature 1). This document discloses "a manhole monitoring system including a plurality of wireless tags which are embedded in a surrounding of a manhole, in which a sensor detecting displacement of soil around the manhole is mounted, and which transmit information acquired by the sensor, and a reader which reads the wireless tag from the ground, which receives the information acquired by the sensor, and which acquires an abnormality of the manhole or a sign thereof".

### [Citation List]

### [Patent Literature]

[PTL 1] Japanese Unexamined Patent Application Publication No. 2015-55915

### [Summary of Invention]

### [Technical Problem]

The above-described PTL 1 discloses a system that detects displacement of the soil around the manhole by a sensor, and using the information acquired by the sensor, the abnormality at an underground portion around the manhole or a sign thereof is detected easily above ground.

However, it lacks to consider early detection of crimes such as manhole theft, prevention of accidents due to erroneous entry of workers, or prevention of accidents caused by opening of the manhole lid due to natural phenomenon.

Recently, it has become an important issue to enhance security, i.e., prevention of terrorism or espionage, during national events, such as while hosting the Olympics, to detect crimes such as thefts, i.e., manhole thefts, at an early stage, and to prevent accidents caused by maintenance operation or natural phenomenon, i.e., prevention of accidents caused by erroneous entry of workers or prevention of opening of manhole lid by natural phenomenon. In addition to the above, the following documents have been found to be of potential relevance: JP 2009 503919 A discloses an alert that a manhole has been tampered with. The described system considers means for sensing environmental parameters within and around manhole enclosures.

The system further considers a housing with the sensor, a radio module, and a communication device. The respective teaching is concerned with problems that relate to sewage spills, welding down manholes, resulting delays in maintenance and emergencies, and the cost involved for wired communications and power supply.

WO 2016/024352 A1 discloses a thermoelectric power supply for a sensor system installed in a manhole lid. The respective teaching is concerned with problems that relate power supply of a remote sensor and proposes to exploit A temperature difference present in the context of manhole/sewage lids.

US 2007/159326 discloses monitoring environmental parameters within an enclosure, especially in the context of detecting risks and problems in the field of water supply and waste water collection, mentioning the attaching of sensors to manhole covers. The respective teaching is concerned with problems that relate hazardous environments and safety measures required for installing sensors, and proposes a remote location of sensors respective to electronics.

JP 2006-323755 A is concerned with problems that relate to acceleration sensor used in intrusion monitoring systems for anomaly detection which may cause wrong determination due to disturbances. It proposes a low pass filter.

JP 2004-364436 A is concerned with problems that relate obtaining information inside a shielded space from the outside of the shielded space and proposes an internal shielded space device provided inside the shielded space having an entrance closed by a metallic member, an external shielded space device provided outside the shielded space, and a relaying device for relaying communication between the shielded space inside device and the external shielded space device.

WO 2007/100191 A1 discloses a wireless system for monitoring manholes and is concerned with problems that relate to the limitations of a public switched telephone network (PSTN).

KR 2004 0055028 discloses a communication manhole security system that performs remotely a monitoring process and a map engine that generates map data.

WO 2007/111412 A1 discloses a manhole monitoring system with low power sensor and a battery, and particular antenna design in the form of an inverted-F type antenna.

US 2010/019912 A1 discloses a manhole security system with sensor on lid employing opening or gas sensor and described a barrier to fit into manhole below lid.

US 2007/103324 A1 discloses remote water level monitoring, incl. additional sensor for manhole cover security. The teaching relies on alert thresholds but the frequency of data transmission from monitoring device to remote monitoring station can vary.

Therefore, the present invention aims at providing a manhole monitoring system and a method thereof, capable of enhancing security during national events, detecting crimes such as manhole theft at an early stage, and preventing accidents caused by maintenance operation of manholes or by natural phenomenon.

### [Means for Solving the Problem]

The mentioned problems are solved by the subject-matter of the independent claims. Further preferred embodiments of the present invention are defined in the dependent claim.

The present invention provides a manhole monitoring system capable of monitoring the opening/closing state of a manhole, and as a result, provide a system that can be utilized as an integrated monitoring base of a social infrastructure. Specifically, for example, as a result of monitoring manholes, it becomes possible to realize early detection of crimes such as manhole theft, prevent accidents due to erroneous entry of workers, and prevent accidents caused by opening of manhole lids due to natural phenomenon, for example. Problems, configurations and effects other than those described above will become apparent in the following description of embodiments.

### [Brief Description of Drawings]

[FIG. 1] FIG. 1 is a block diagram illustrating a configuration example of a manhole monitoring system according to the present invention.
[FIG. 2] FIG. 2 is a view schematically illustrating a flow of data using radio wave from a wireless device from a manhole opening/closing sensor attached to a manhole to a gateway and a data center.
[FIG. 3] FIG. 3 is a view illustrating examples of detecting abnormality of a manhole based on sensing information from a sensor.
[FIG. 4] FIG. 4 is a flowchart illustrating a procedure of manhole management process performed in a monitoring platform.
[FIG. 5] FIG. 5 is a view illustrating a configuration example of a manhole management table in a manhole management apparatus of a manhole management system configured to manage manholes.
[FIG. 6] FIG. 6 is a flowchart illustrating another procedure of manhole management process in the monitoring platform according to the present invention.

### [Description of Embodiments]

Now, preferred embodiments will be described with reference to the drawings.

### [First Embodiment]

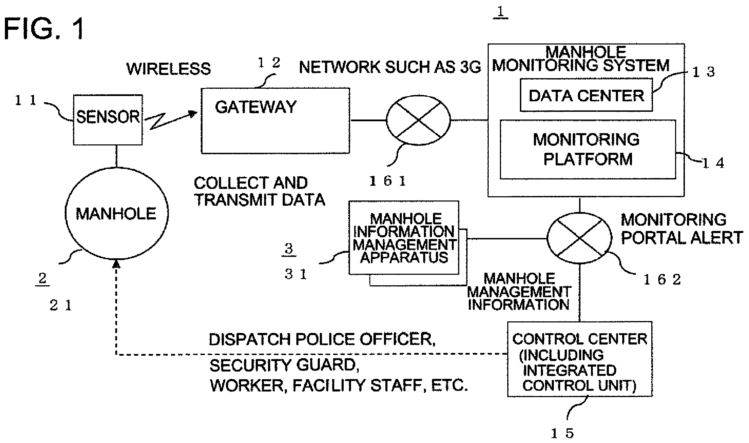

FIG. 1 is a block diagram illustrating a configuration example of a manhole monitoring system according to the present invention.

There is a tremendous number of manholes 2, and if abnormality occurs to a manhole 2, it is not easy to promptly specify a place where the manhole to which abnormality has occurred is installed. The present invention constructs a manhole monitoring system capable of promptly and precisely preventing abnormality of manholes, in other words, preventing crimes and accidents related to manholes.

A manhole monitoring system 1 includes a manhole opening/closing sensor 11, a gateway 12, a data center 13, a monitoring platform 14, and a (customer side) control center 15.

The manhole opening/closing sensor (device) 11 includes a function to transmit an opening/closing state data including sensing information of an additional temperature sensor indicating an opening/closing state of a manhole lid 21 in various types of manholes 2, such as for gate valves between water supply and sewerage, or for fire hydrant. Opening/closing state data is transmitted periodically at an interval of one hour or shorter, for example.

The manhole opening/closing sensor (device) 11 is composed of an acceleration sensor and an additional temperature sensor. If the manhole opening/closing sensor is used in combination with one or more of the following; (sensor information such as temperature information, odor information, water quality information, gas quality information, flow rate information or water level information from) the claimed temperature sensor, an odor sensor, a water quality sensor, a gas quality sensor, a flow rate sensor and a water level sensor, not only the opening/closing state of the manhole lid but also the condition within the manhole can be comprehended precisely.

The manhole opening/closing sensor 11 measures movement of the manhole 2, and it is suitable for detecting the opening and closing of the manhole lid on the manhole 2.

The temperature sensor measures temperature inside the manhole 2, and it is suitable for detecting fire caused by mischief or accident, and ensuring safety of workers.

The odor sensor measures humidity inside the manhole 2, and it is suitable for detecting prediction of sensor life and ensuring safety of workers.

The water quality sensor measures water quality of flowing water, and it is suitable for detecting mixing in of poisonous or foreign liquid, and for performing correlation analysis with degradation of pipes.

The gas quality sensor measures type of gas and concentration thereof inside the manhole 2, and it is suitable for detecting poisonous gas and detecting oxygen deficiency.

The flow rate sensor measures flow rate of the water flowing through a pipe, and it is suitable for detecting water leakage.

The water level sensor measures water level of water in the water pipe, and it is suitable for preventing accidents caused by so-called guerrilla rainstorm and typhoon.

The gateway 12 collects the manhole opening/closing state data from the manhole opening/closing sensor 11, and transmits the data through a network 161 such as a 3G network to the data center 13. The gateway 12 utilizes a general-purpose all-weather gateway that can be installed outdoors, for example.

The data center 13 has a function to provide data center service solutions. The data center service includes, for example, a server / mainframe outsourcing service that corresponds widely to operating business systems of customers based on operation know-hows, a life cycle solution center service that provides various solutions for supporting housing and other IT system lifecycles, and an IT resource that is required for the entire IT system lifecycle, such as development, operation and maintenance of the IT system, in the data center.

The monitoring platform 14 is prepared, for example, in the data center 13, and has a function to extract, collect, accumulate, analyze and detect only data that serves as a point of analysis from the opening/closing state data collected through the gateway 12, such as by excluding data transmitted periodically to monitor the state of the sensor and the gateway and extracting other data.

The monitoring platform 14 collects the manhole opening/closing state data transmitted from the manhole opening/closing sensor 11 through the gateway 12, extracts and accumulates data serving as the point of analysis from the collected manhole opening/closing state data, analyzes the desired data, such as judging only the movement of the acceleration sensor caused by the opening of the lid using a threshold value set in advance, and detects opening and closing of the manhole lid 21.

The analyzed data is provided to the control center 15 side through a portal site or an alert mail.

The control center 15 includes an integrated control unit, and receives analyzed data analyzed by the monitoring platform 14, i.e., result of analysis, to realize appropriate measures in response to the opening/closing state of the manhole 2, such as the removal of the manhole 2, traffic regulation and other measures that may be taken by police officers, security guards, workers or facility staffs of respective infrastructure management organizations.

The control center 15 side can utilize the analyzed data, and create appropriate instructions to relevant departments, such as to police officers, security guards, workers and facility staffs, or create various reports.

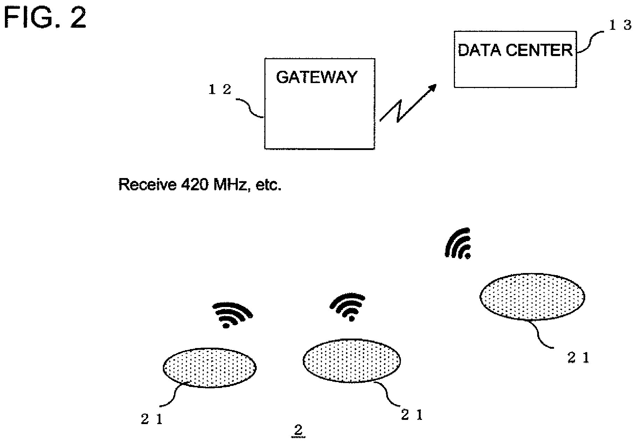

FIG. 2 is a view illustrating the relationship of the manhole lid 21 of the manhole 2, a manhole receiving frame 22, and the manhole opening/closing sensor 11.

The manhole opening/closing sensor 11 is attached to an inner side, that is, receiving frame side, of the manhole lid 21. The attachment of the sensor is performed by hanging the sensor on a rear side of the manhole lid 21 using a chain or a reinforcing rib.

The manhole opening/closing sensor 11 includes a wireless device, a microcomputer, an opening/closing sensor, and a battery.

FIG. 2 is a schematic view illustrating a flow of the data transmitted by radio waves from a wireless device 111 of the manhole opening/closing sensor 11 attached to the manhole 2, to the gateway 12 and the data center 13.

The gateway 12 receives data, i.e., manhole opening/closing data transmitted via specified low power radio of 429-MHz band, for example, from the manhole opening/closing sensor 11 attached to manholes 2 within a certain zone, and transmits the received data via 3G radio waves through the network 161 to the data center 13.

The gateway 12 being used should satisfy the following conditions, for example.
(1) Have a high durability and can be installed outdoors.
(2) Be installed every few-hundred-meter area, taking advantage of long distance communication and wraparound characteristics of the specified low power radio.
(3) Be capable of having a variety of communication modules and machines installed.

The gateway 12 can be mounted, for example, on electric poles. It can also be mounted on outdoor lights, signal poles, buildings and so on. Thereby, range of use can be expanded to sensing performed at various locations.

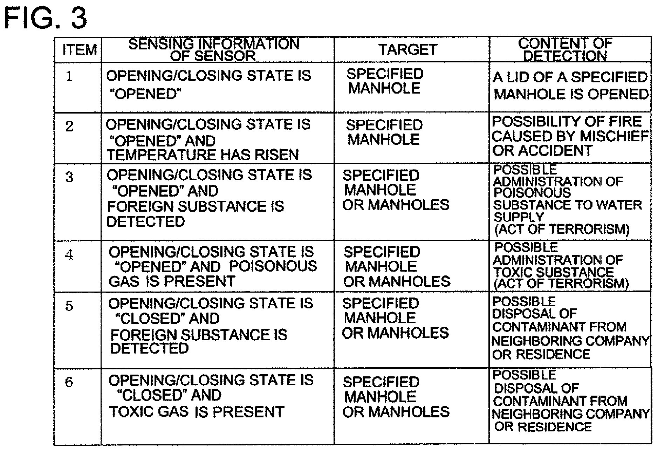

FIG. 3 is a view illustrating an example of detecting abnormality in the manholes 2 based on sensing information from the sensor 11.

Abnormality in the manholes 2 can be detected by detecting the state, i.e., contents of detection, of the manholes 2 being the target of detection based on the result of analysis and determination of the sensing information of the sensor 11.

For example, the following contents of detection can be determined based on the sensing information from the sensor 11. The determination can be performed by registering the information serving as a detection criteria in advance, and collating and comparing the information serving as the criteria with the sensing information.

According to the invention abnormality is detected as follows: in a case where the "opening/closing state" is "opened" and the temperature has risen (item number 2), the content of detection is set to be "possible fire caused by mischief or accident to a specific manhole". Abnormality can be also detected as follows:
in a case where the "opening/closing state is "opened"" (item number 1), the content of detection is set to be "a specified manhole lid is opened";
in a case where the "opening/closing state is "opened" and a foreign substance is detected" (item number 3), the content of detection is set to be "possible administration of poisonous substance or the like to water supply through a specific manhole or a plurality of manholes (act of terrorism)";
in a case where the "opening/closing state is "opened" and poisonous gas is present" (item number 4), the content of detection is set to be "possible administration of toxic substance to a specific manhole or a plurality of manholes (act of terrorism)";
in a case where the "opening/closing state is "closed" and foreign substance is detected" (item number 5), the content of detection is set to be "possible disposal of contaminant from a neighboring company or residence of a specific manhole or a plurality of manholes"; and
in a case where the "opening/closing state is "closed" and toxic gas is present" (item number 6), the content of detection is set to be "possible disposal of contaminant from a neighboring company or residence of a specific manhole or a plurality of manholes".

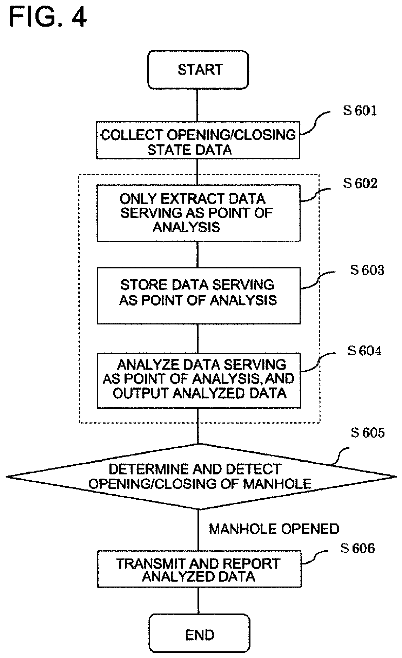

FIG. 4 is a flowchart illustrating a procedure of a manhole management process in the monitoring platform 14. The operation based on the flowchart of FIG. 4 is as follows.

Step S601: The monitoring platform 14 collects manhole opening/closing data (including sensing information of the temperature sensor) transmitted from the manhole opening/closing sensor 11 attached to the manhole 2 through the gateway 12 and the data center 13.

Step S602: The monitoring platform 14 only extracts data that serves as the point of analysis and omits unnecessary data for analyzing opening/closing of the manhole from the manhole opening/closing data collected in step S601, such as by excluding data transmitted periodically to monitor the state of the sensor or the gateway, and extract other data, i.e., performs feature extraction.

Step S603: The monitoring platform 14 only stores data serving as the point of analysis extracted in step S602 to the data storage unit.

Step S604: The monitoring platform 14 analyzes the data serving as the point of analysis, i.e., sensing information from the temperature sensor, extracted in step S602, such as by determining only the movement of the acceleration sensor caused by the opening of the lid based on a threshold value set in advance, and outputs the analyzed data, such as the opening/closing state and other information.

In the above-described steps S602 through S604, the procedure for extracting, storing and analyzing only the data serving as the point of analysis is illustrated, but this is merely an example, and the data used for analyzing data can be changed according to need, and it is not restricted only to the data serving as the point of analysis.

Step S605: The monitoring platform 14 determines the opening/closing of the manhole lid 21 of the manhole 2 based on the analyzed data analyzed in step S604.

Step S606: If the opening of the manhole lid 21 is detected in step S605, the monitoring platform 14 transmits and reports the analyzed data including the information indicating the opening of the manhole lid to the control center 15 side.

### [Second Embodiment]

The present embodiment relates to having the manhole monitoring system 1 according to the first embodiment cooperate with a manhole management system 3 including a manhole information management apparatus 31, and in a case where a manhole 2 is opened, to determine whether the manhole is opened due to abnormality based on various information related to the manhole whose date and time of opening is managed by the manhole information management apparatus 31.

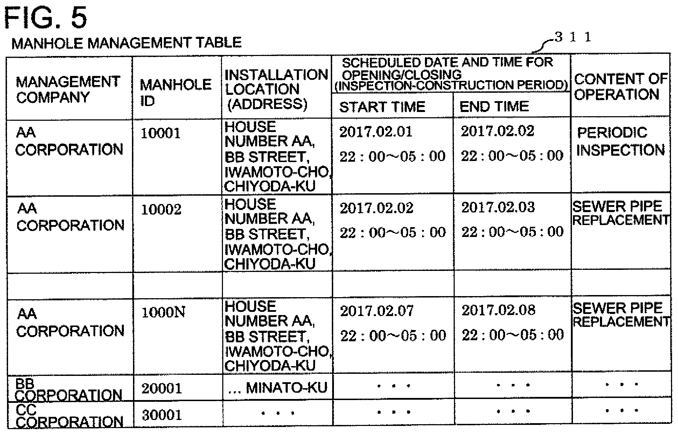

FIG. 5 is a configuration example of a manhole management table 311 in the manhole information management apparatus 31 (refer to FIG. 1) of the manhole management system 3 configured to manage manholes.

The manhole management table 311 includes various information, such as management company, manhole ID, installation location, scheduled date and time of opening/closing (such as inspection - construction period), and content of operation. The management company is the name of a company managing the manhole, the manhole ID is an ID for identifying the manhole, the installation location is information sufficient for specifying the installation location of the manhole, such as the address or GPS information and the scheduled date and time of opening/closing, such as the inspection - construction period, is the scheduled date and time for opening and closing the manhole, such as the period of construction or the time (start time and end time) of construction, and the content of operation is information indicating whether the operation is a periodic inspection, a replacement of sewer pipe, and so on.

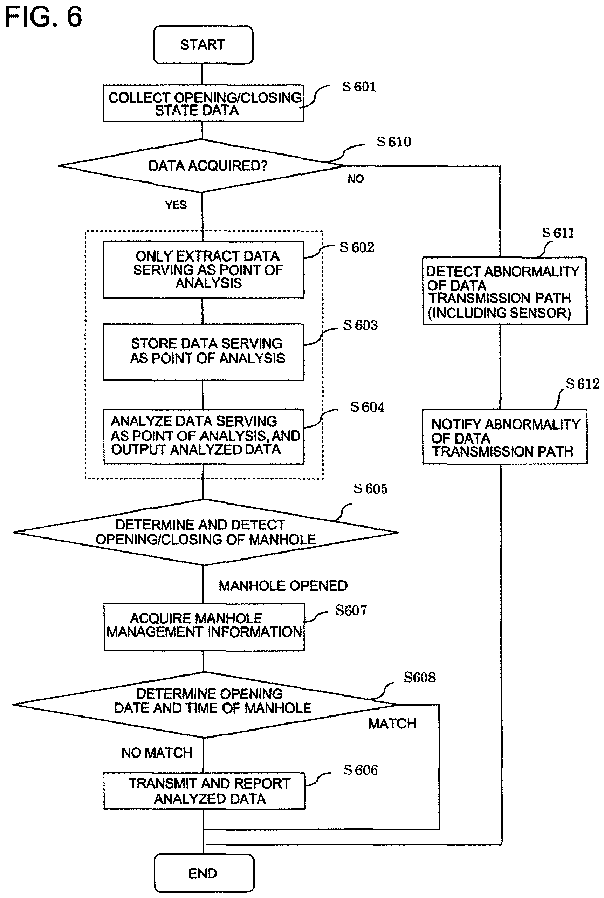

FIG. 6 provides steps S607 and S608 subsequent to step S605 of the first embodiment, wherein if the manhole 2 is opened, the date and time of opening is determined based on various information related to the manhole managed by the manhole information management apparatus 31, and whether the manhole has been opened by an administrator side of the manhole, such as by a worker, is determined.

With reference to FIG. 6, only the steps that differ from the first embodiment will be described below.

Step S607: If it is determined that the manhole is opened in step S605, the monitoring platform 14 acquires the information related to the manhole from the manhole information management apparatus 31.

That is, if the manhole lid of the manhole 2 is opened, the monitoring platform 14 has a function to extract manhole management information including the scheduled date and time of opening/closing of the manhole from the manhole information management apparatus 31, and in the same step, if the manhole lid of the manhole 2 is opened, the manhole management information including the scheduled date and time of opening/closing of the manhole is extracted from the manhole information management apparatus 31.

Step S608: The monitoring platform 14 has a function to determine confirmation of opening of the manhole lid, and in the same step, the monitoring platform 14 compares the date and time of opening of the manhole lid of the manhole 2 with the scheduled date and time of opening/closing in the manhole management information managed by the manhole information management apparatus 31, and if the date and time of opening of the manhole lid is within the scheduled date and time of opening/closing of the manhole management information, it is determined that the manhole lid was opened by the administrator side of the manhole information management apparatus 31, and if the time did not fall within the scheduled date and time of opening/closing in the manhole management information, it is determined that the manhole lid was opened by someone other than the administrator of the manhole management apparatus.

The non claimed example also determines whether opening/closing state data by the sensor 11 had been acquired by the manhole monitoring system 1 according to embodiment 1 or embodiment 2, and detects abnormality of a data transmission path including the sensor 11 and the gateway 12.

With reference to FIG. 6, only that steps that differ from the first and second embodiments will be illustrated below.

Step S610: The monitoring platform 14 determines whether opening/closing state data is acquired in step S601. That is, if the opening/closing state data transmitted from an opening/closing sensor 11 is set to be transmitted every hour, for example, it can be determined whether the opening/closing state data is acquired by determining whether the opening/closing data has been transmitted each hour. If the opening/closing state data is acquired (YES), the procedure advances to step S602, but if the opening/closing state data is not acquired (NO), the procedure advances to step S611.

Step S611: If the opening/closing state data is not acquired in step S610, the monitoring platform 14 detects that some abnormality has occurred in the data transmission path including the sensor 11 and the gateway 12. An abnormality of data transmission path includes, for example, battery exhaustion of the sensor 11, failure of the gateway 12, interruption of wireless communication between the sensor 11 and the gateway 12, and the interruption of the network 161.

Step S612: If abnormality of the data transmission path is detected in step S611, the monitoring platform 14 notifies the abnormality to the control center 15. The cause and the countermeasure against the situation can be executed immediately by the side receiving this notification.

According to the above-described non claimed example, the installation location of the manhole can be specified, the opening/closing state of the manhole lid can be detected precisely, and the countermeasures according to the situation can be executed promptly. Further, by combining the acceleration sensor with other sensors described above, not only the opening and closing of the manhole lid but also other assumed abnormalities can be detected at the same time, so that a more precise monitoring of the manhole is enabled.

The configurations and functions described above may be realized by software using a processor interpreting and executing programs that realize the respective functions.

### [Reference Signs List]

1 manhole monitoring system
11 manhole opening/closing sensor
2 manhole
21 manhole lid
12 gateway
13 data center
14 monitoring platform
15 control center (including integrated control unit)
161, 162 network
3 manhole management system
31 manhole information management apparatus

## Claims

1. A manhole monitoring system (1) comprising:
a manhole opening/closing sensor (11) including a combination of an acceleration sensor and an additional temperature sensor;
said manhole opening/closing sensor (11) being attached to a rear side of a manhole lid (21) or a lid frame portion of a manhole (2) by suspension or adhesion and configured to periodically transmit, to a gateway (12) via a radio wave, opening/closing state data that includes sensing information from the acceleration sensor and said additional temperature sensor;
a monitoring platform (14) configured to monitor the manhole; and
a gateway (12) configured to receive a radio wave that includes at least the opening/closing state data transmitted from the manhole opening/closing sensor (11) and transmit the opening/closing state data to the monitoring platform (14),
and wherein the monitoring platform (14) is configured to:
collect the opening/closing state data transmitted through the gateway (12),
analyze only extracted data that serves as a point of analysis by judging only the movement of the acceleration sensor to determine, based on the sensing information from the acceleration sensor caused by opening the lid (21) and using a predetermined threshold value, whether the lid (21) of the manhole is opened or closed, and to detect an abnormality in the manhole in the form of possible fire if it is determined that the manhole is opened and the temperature in the manhole has risen,
and to
perform control to transmit an opening/closing determination result to a control center side (15), if it is determined that the manhole lid (21) of the manhole is opened, based on the opening/closing determination result of the manhole lid (21).

2. The manhole monitoring system of claim 1, wherein:
the manhole opening/closing sensor (11) includes:
a wireless device configured to periodically transmit the opening/closing state data using a specific low-power wireless communication protocol, and
the gateway (12) has high durability, is installed outdoors, is configured to receive radio waves of the specific low-power wireless communication protocol transmitted by the wireless device, and has long-distance communication functionality,
the control center side (15) includes a manhole management device (31) configured to manage manhole management information that includes a scheduled opening and closing date and time of the manhole;
the monitoring platform (14) includes a manhole lid opening confirmation determination unit coupled with the manhole management device;
and the manhole cover opening configuration determination unit is configured to:
extract manhole management information that includes a scheduled opening and closing date of the manhole,
compare a date and time when the manhole lid of the manhole was opened with the scheduled opening and closing date and time of the manhole management information managed by the manhole management device,
determine, in a case that the opening and closing date and time when the manhole lid was opened is within the scheduled opening and closing date and time of the manhole management information, that the manhole cover was opened by a manager of the manhole management device, and output the manhole management information, and
determine, in a case that the opening and closing date and time when the manhole lid was opened is outside the scheduled opening and closing date and time of the manhole management information, that the manhole lid was opened by a person other than the manager of the manhole management device.

3. A manhole monitoring method for a manhole monitoring system (1) of claim 1,
wherein the method comprises the monitoring platform performing the steps of:
collecting the opening/closing state data transmitted through the gateway (12),
analyzing only extracted data that serves as a point of analysis by judging only the movement of the acceleration sensor to determine, based on the sensing information from the acceleration sensor caused by opening the lid (21) and using a predetermined threshold value, whether the lid (21) of the manhole is opened or closed, and to detect an abnormality in the manhole in the form of possible fire if it is determined that the manhole is opened and the temperature in the manhole has risen,
and a step of
performing control to transmit an opening/closing determination result to a control center side (15), if it is determined that the manhole lid (21) of the manhole is opened, based on the opening/closing determination result of the manhole lid (21).

## Patentansprüche

1. Einstiegsschachtüberwachungssystem (1), umfassend:
einen Einstiegsschacht-Öffnungs-/Schließsensor (11), einschließlich einer Kombination aus einem Beschleunigungssensor und einem zusätzlichen Temperatursensor;
wobei der Einstiegsschacht-Öffnungs-/Schließsensor (11) an einer Rückseite eines Einstiegsschachtdeckels (21) oder eines Deckelrahmenabschnitts eines Einstiegsschachts (2) durch Aufhängung oder Adhäsion befestigt ist und so konfiguriert ist, dass er periodisch über eine Funkwelle Öffnungs-/Schließzustandsdaten, die Erfassungsinformationen von dem Beschleunigungssensor und dem zusätzlichen Temperatursensor einschließen, an ein Gateway (12) überträgt;
eine Überwachungsplattform (14), die so konfiguriert ist, dass sie den Einstiegsschacht überwacht; und
ein Gateway (12), das so konfiguriert ist, dass es eine Funkwelle empfängt, die zumindest die von dem Einstiegsschacht-Öffnungs-/Schließsensor (11) übertragenen Öffnungs-/Schließzustandsdaten einschließt, und die Öffnungs-/Schließzustandsdaten an die Überwachungsplattform (14) überträgt,
und wobei die Überwachungsplattform (14) konfiguriert ist zum:
Sammeln der über das Gateway (12) übertragenen Öffnungs-/Schließzustandsdaten,
Analysieren nur der extrahierten Daten, die als ein Analysepunkt dienen, indem nur die Bewegung des Beschleunigungssensors beurteilt wird, zum Bestimmen, basierend auf der Erfassungsinformation von dem Beschleunigungssensor, die durch das Öffnen des Deckels (21) verursacht wird, und unter Verwendung eines vorbestimmten Schwellenwerts, ob der Deckel (21) des Einstiegsschachts geöffnet oder geschlossen ist, und zum Detektieren einer Abnormalität in dem Einstiegsschacht in Form eines möglichen Feuers, wenn bestimmt wird, dass der Einstiegsschacht geöffnet ist und die Temperatur in dem Einstiegsschacht angestiegen ist,
und zum
Durchführen einer Steuerung, um ein Öffnungs-/Schließ-Bestimmungsergebnis an eine Steuerstellenseite (15) zu übertragen, wenn bestimmt wird, dass der Einstiegsschachtdeckel (21) des Einstiegsschachts geöffnet ist, basierend auf dem Öffnungs-/Schließ-Bestimmungsergebnis des Einstiegsschachtdeckels (21).

2. Einstiegsschachtüberwachungssystem nach Anspruch 1, wobei:
der Einstiegsschacht-Öffnungs-/Schließsensor (11) Folgendes einschließt:
eine drahtlose Vorrichtung, die so konfiguriert ist, dass sie periodisch die Öffnungs-/Schließzustandsdaten unter Verwendung eines spezifischen stromsparenden, drahtlosen Kommunikationsprotokolls überträgt, und
das Gateway (12) eine hohe Haltbarkeit aufweist, im Freien installiert ist, so konfiguriert ist, dass es Funkwellen des spezifischen stromsparenden, drahtlosen Kommunikationsprotokolls empfängt, das von der drahtlosen Vorrichtung übertragen wird, und eine Fernkommunikationsfunktionalität aufweist,
die Steuerstellenseite (15) eine Einstiegsschachtverwaltungsvorrichtung (31) einschließt, die so konfiguriert ist, dass sie eine Einstiegsschachtverwaltungsinformation verwaltet, die ein geplantes Datum und eine geplante Uhrzeit für das Öffnen und Schließen des Einstiegsschachtes einschließt;
die Überwachungsplattform (14) eine mit der Einstiegsschachtverwaltungsvorrichtung gekoppelte Einstiegsschachtdeckelöffnungsbestätigungsbestimmungseinheit einschließt;
und die Einstiegsschachtabdeckungsöffnungskonfigurationsbestimmungseinheit konfiguriert ist zum: Extrahieren von einer Einstiegsschachtverwaltungsinformation, die ein geplantes Öffnungs- und Schließdatum des Einstiegsschachts einschließt, Vergleichen eines Datums und einer Uhrzeit, zu der der Einstiegsschachtdeckel des Einstiegsschachts geöffnet wurde, mit dem geplanten Datum und der geplanten Uhrzeit für das Öffnen und Schließen der von der Einstiegsschachtverwaltungsvorrichtung verwalteten Einstiegsschachtverwaltungsinformation, Bestimmen, in einem Fall, dass das Öffnungs- und Schließdatum und die Uhrzeit, zu der der Einstiegsschachtdeckel geöffnet wurde, innerhalb des geplanten Datums und der geplanten Uhrzeit für das Öffnen und Schließen der Einstiegsschachtverwaltungsinformation liegt, dass die Einstiegsschachtabdeckung von einem Verwalter der Einstiegsschachtverwaltungsvorrichtung geöffnet wurde, und Ausgeben der Einstiegsschachtverwaltungsinformation, und Bestimmen, in einem Fall, dass das Öffnungs- und Schließdatum und die Zeit, zu der der Einstiegsschachtdeckel geöffnet wurde, außerhalb des geplanten Datums und der geplanten Uhrzeit für das Öffnen und das Schließen der Einstiegsschachtverwaltungsinformation liegen, dass der Einstiegsschachtdeckel von einer anderen Person als dem Verwalter der Einstiegsschachtverwaltungsvorrichtung geöffnet wurde.

3. Einstiegsschachtüberwachungsverfahren für ein Einstiegsschachtüberwachungssystem (1) nach Anspruch 1,
wobei das Verfahren umfasst, dass die Überwachungsplattform die Schritte durchführt von:
Sammeln der über das Gateway (12) übertragenen Öffnungs-/Schließzustandsdaten,
Analysieren nur der extrahierten Daten, die als ein Analysepunkt dienen, indem nur die Bewegung des Beschleunigungssensors beurteilt wird, zum Bestimmen, basierend auf der Erfassungsinformation von dem Beschleunigungssensor, die durch das Öffnen des Deckels (21) verursacht wird, und unter Verwendung eines vorbestimmten Schwellenwerts, ob der Deckel (21) des Einstiegsschachts geöffnet oder geschlossen ist, und zum Detektieren einer Abnormalität in dem Einstiegsschacht in Form eines möglichen Feuers, wenn bestimmt wird, dass der Einstiegsschacht geöffnet ist und die Temperatur in dem Einstiegsschacht angestiegen ist,
und einen Schritt von
Durchführen einer Steuerung zum Übertragen eines Öffnungs-/Schließ-Bestimmungsergebnisses an eine Steuerstellenseite (15), wenn bestimmt wird, dass der Einstiegsschachtdeckel (21) des Einstiegsschachts geöffnet ist, basierend auf dem Öffnungs-/Schließ-Bestimmungsergebnis des Einstiegsschachtdeckels (21).

## Revendications

1. Système de surveillance de regard (1) comprenant :
un capteur d'ouverture/fermeture de regard (11) incluant une combinaison d'un capteur d'accélération et d'un capteur de température supplémentaire ;
dans lequel ledit capteur d'ouverture/fermeture de regard (11) est attaché à un côté arrière d'un couvercle de regard (21) ou d'une partie de cadre de couvercle d'un regard (2) par suspension ou adhésion et est configuré de manière à transmettre périodiquement, à une passerelle (12) par l'intermédiaire d'une onde radio, des données d'état d'ouverture/fermeture qui incluent des informations de détection provenant du capteur d'accélération et dudit capteur de température supplémentaire ;
une plate-forme de surveillance (14) configurée de manière à surveiller le regard ; et
une passerelle (12) configurée de manière à recevoir une onde radio qui inclut au moins les données d'état d'ouverture/fermeture transmises depuis le capteur d'ouverture/fermeture de regard (11) et à transmettre les données d'état d'ouverture/fermeture à la plate-forme de surveillance (14),
et dans lequel la plate-forme de surveillance (14) est configurée de manière à :
collecter les données d'état d'ouverture/fermeture transmises par la passerelle (12),
analyser uniquement les données extraites qui servent de point d'analyse en évaluant uniquement le mouvement du capteur d'accélération afin de déterminer, sur la base des informations de détection provenant du capteur d'accélération suite à l'ouverture du couvercle (21) et en utilisant une valeur de seuil prédéterminée, si le couvercle (21) du regard est ouvert ou fermé, et de détecter une anomalie dans le regard sous la forme d'un incendie possible s'il est déterminé que le regard est ouvert et que la température à l'intérieur du regard a augmenté,
et à
exécuter une commande pour transmettre un résultat de détermination d'ouverture/fermeture à un côté centre de commande (15), s'il est déterminé que le couvercle de regard (21) du regard est ouvert, sur la base du résultat de détermination d'ouverture/fermeture du couvercle de regard (21).

2. Système de surveillance de regard selon la revendication 1, dans lequel :
le capteur d'ouverture/fermeture de regard (11) inclut :
un dispositif sans fil configuré de manière à transmettre périodiquement les données d'état d'ouverture/fermeture en utilisant un protocole de communication sans fil à basse puissance spécifique, et
la passerelle (12) présente une grande durabilité, est installée à l'extérieur, est configurée de manière à recevoir des ondes radio du protocole de communication sans fil à basse puissance spécifique transmises par le dispositif sans fil, et présente une fonctionnalité de communication à longue distance,
le côté centre de commande (15) inclut un dispositif de gestion de regard (31) qui est configuré de manière à gérer des informations de gestion de regard qui incluent une date et une heure d'ouverture et de fermeture programmées du regard ;
la plate-forme de surveillance (14) inclut une unité de détermination de confirmation d'ouverture de couvercle de regard qui est couplée au dispositif de gestion de regard ;
et l'unité de détermination de configuration d'ouverture de couvercle de regard est configurée de manière à : extraire des informations de gestion de regard qui incluent une date d'ouverture et de fermeture programmée du regard, comparer une date et une heure auxquelles le couvercle de regard a été ouvert avec la date et l'heure d'ouverture et de fermeture programmées des informations de gestion de regard gérées par le dispositif de gestion de regard, déterminer, dans le cas où la date et l'heure d'ouverture et de fermeture auxquelles le couvercle de regard a été ouvert sont à l'intérieur de la date et de l'heure d'ouverture et de fermeture programmées des informations de gestion de regard, que le couvercle de regard a été ouvert par un responsable du dispositif de gestion de regard, et émettre les informations de gestion de regard, et déterminer, dans le cas où la date et l'heure d'ouverture et de fermeture auxquelles le couvercle de regard a été ouvert se situent à l'extérieur de la date et de l'heure d'ouverture et de fermeture programmées des informations de gestion de regard, que le couvercle du regard a été ouvert par une personne autre que le responsable du dispositif de gestion de regard.

3. Procédé de surveillance de regard pour un système de surveillance de regard (1) selon la revendication 1,
dans lequel le procédé comprend l'exécution par la plate-forme de surveillance des étapes consistant à :
collecter les données d'état d'ouverture/fermeture transmises par l'intermédiaire de la passerelle (12),
analyser uniquement des données extraites qui servent de point d'analyse en évaluant uniquement le mouvement du capteur d'accélération afin de déterminer, sur la base des informations de détection provenant du capteur d'accélération suite à l'ouverture du couvercle (21) et en utilisant une valeur de seuil prédéterminée, si le couvercle (21) du regard est ouvert ou fermé, et de détecter une anomalie dans le regard sous la forme d'un incendie possible s'il est déterminé que le regard est ouvert et que la température à l'intérieur du regard a augmenté,
et une étape consistant à
exécuter une commande pour transmettre un résultat de détermination d'ouverture/fermeture à un côté centre de commande (15), s'il est déterminé que le couvercle de regard (21) du regard est ouvert, sur la base du résultat de détermination d'ouverture/fermeture du couvercle de regard (21).
